(19) Europäisches Patentamt
European Patent Office
Office européen des brevets

(11) Veröffentlichungsnummer: **0 009 103**
**B1**

(12) **EUROPÄISCHE PATENTSCHRIFT**

(45) Veröffentlichungstag der Patentschrift: **29.04.81**

(51) Int. Cl.³: **C 07 F 9/65,** A 01 N 57/16

(21) Anmeldenummer: **79102754.3**

(22) Anmeldetag: **01.08.79**

(54) **N-(O-Äthyl-S-n-propyl-(di)thiophosphoryloxy)-naphtalimide, Verfahren zu ihrer Herstellung, diese Verbindungen enthaltende Schädlingsbekämpfungsmittel, ihre Herstellung und Verwendung.**

(30) Priorität: **19.08.78 DE 2836328**

(43) Veröffentlichungstag der Anmeldung: **02.04.80 Patentblatt 80/7**

(45) Bekanntmachung des Hinweises auf die Patenterteilung: **29.04.81 Patentblatt 81/17**

(84) Benannte Vertragsstaaten: **AT BE CH DE FR GB IT NL SE**

(56) Entgegenhaltungen:
**CH-A-471 155**
**DE-A-2 248 307**
**US-A-3 312 706**
**DE-B-1 207 931**

(73) Patentinhaber: **BAYER AG, Zentralbereich Patente, Marken und Lizenzen, D-5090 Leverkusen 1, Bayerwerk (DE)**

(72) Erfinder: **Fest, Christa, Dr., Im Johannistal 20, D-56 Wuppertal-1 (DE)**
Erfinder: **Hoffmann, Hellmut, Dr., Tersteegenweg 17, D-56 Wuppertal-1 (DE)**
Erfinder: **Hammann, Ingeborg, Dr., Belfortstrasse 9, D-5 Köln 1 (DE)**
Erfinder: **Stendel, Wilhelm, Dr., In den Birken 55, D-56 Wuppertal-1 (DE)**

**EP 0 009 103 B1**

Anmerkung: Innerhalb von neun Monaten nach der Bekänntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

N-(O-Äthyl-S-n-propyl-(di)thiophosphoryloxy)-naphthalimide, Verfahren zu ihrer Herstellung, diese Verbindungen enthaltende Schädlingsbekämpfungsmittel, ihre Herstellung und Verwendung

Die Erfindung betrifft neue N-(O-Äthyl-S-n-propyl-(di)-thiophosphoryloxy)-naphthalimide, ein Verfahren zu ihrer Herstellung, diese Verbindungen enthaltende Schädlingsbekämpfungsmittel, deren Herstellung und ihre Verwendung als Insektizide.

Es ist bekannt, daß bestimmte N-(O,O-Dialkylphosphoryloxy)-naphthalimide, wie z. B. N-(O,O-Diäthylphosphoryloxy)-naphthalimid, insektizide Eigenschaften aufweisen (vergleiche J. Econ. Entomol., 55 [1962], 142/143). Ebenso sind der insektizid wirkende O,O-Diäthyl-O-naphthalimidothionophosphorsäureester (vgl. DE-AS 1 207 931) und insektizid wirkende O-Alkyl-O-naphthalimido-N-alkyl-phosphorimido-thioate (vgl. US-PS 3 312 706) bekannt.

Die Wirkung dieser Verbindungen ist insbesondere bei niedrigen Aufwandmengen und Wirkstoffkonzentrationen nicht immer zufriedenstellend.

Es wurden nun die neuen N-(O-Äthyl-S-n-propyl-(di)thiophosphoryloxy)-naphthalimide der Formel

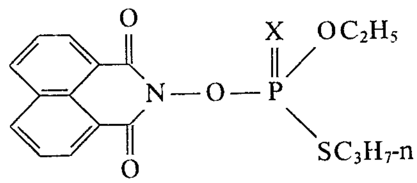

in welcher
X für Sauerstoff oder Schwefel steht,
gefunden.

Die neuen Verbindungen zeichnen sich durch hohe Wirksamkeit bei der Schädlingsbekämpfung, insbesondere durch hohe insektizide Wirksamkeit, aus und sind den strukturell ähnlichsten Verbindungen des Standes der Technik in überraschender Weise überlegen.

Weiter wurde gefunden, daß man die neuen N-(O-Äthyl-S-n-propyl-(di)thiophosphoryloxy)-naphthalimide der Formel (I) erhält, wenn man O-Äthyl-S-n-propyl-(di)-thiophosphorsäurediesterhalogenide der Formel

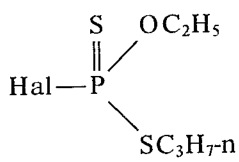

(II)

in welcher
X für Sauerstoff oder Schwefel steht und
Hal für Chlor oder Brom, insbesondere für Chlor steht,
mit Naphthaloxim der Formel

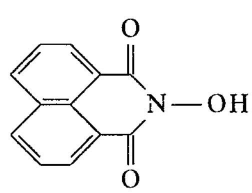

(III)

gegebenenfalls in Gegenwart eines Säureakzeptors und gegebenenfalls in Gegenwart eines Verdünnungsmittels, umsetzt.

Überraschenderweise zeigen die erfindungsgemäßen N-(O-Äthyl-S-n-propyl-(di)-thiophosphoryloxy)-naphthalimide eine bessere Wirksamkeit bei der Schädlingsbekämpfung, insbesondere eine bessere insektizide Wirkung als die entsprechenden aus dem Stand der Technik bekannten Verbindungen analoger Konstitution und gleicher Wirkungsrichtung. Die Produkte gemäß vorliegender Erfindung stellen somit eine wertvolle Bereicherung der Technik dar.

Verwendet man beispielsweise O-Äthyl-S-n-propyl-dithiophosphorsäure-diesterchlorid und Naphthaloxim als Ausgangsstoffe, so kann die Reaktion dieser Verbindungen durch folgendes Formelschema skizziert werden:

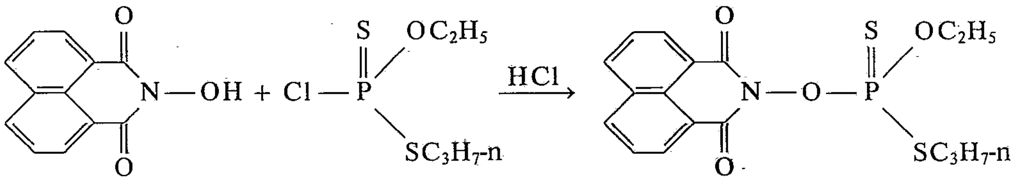

Als Beispiele für die als Ausgangsstoffe zu verwendenden O-Äthyl-S-n-propyl-(di)-thiophosphorsäurediesterhalogenide (II) seien genannt:

O-Äthyl-S-n-propyl-thiolphosphorsäurediesterchlorid und
O-Äthyl-S-n-propyl-dithiophosphorsäurediesterchlorid.

Diese Verbindungen sind bereits bekannt.

Ebenso ist das als weitere Ausgangsverbindung zu verwendende Naphthaloxim (III) bekannt.

Das Verfahren zur Herstellung der erfindungsgemäßen N-(O-Äthyl-S-n-propyl-(di)-thiophosphoryloxy)-naphthalimide wird bevorzugt unter Verwendung geeigneter Lösungs- oder Verdünnungsmittel durchgeführt. Als solche kommen praktisch alle inerten organischen Solventien in Frage. Hierzu gehören insbesondere aliphatische und aromatische, gegebenenfalls chlorierte Kohlenwasserstoffe, wie Benzin, Benzol, Toluol, Xylol, Methylenchlorid, Chloroform, Tetrachlorkohlenstoff, Chlorbenzol und o-Dichlorbenzol, Äther wie Diäthyl- und Dibutyläther, Tetrahydrofuran und Dioxan, Ketone wie Aceton, Methyläthyl-, Methylisopropyl- und Methylisobutylketon, Nitrile wie Acetonitril und Propionitril sowie Carbonsäureamide wie Dimethylformamid.

Als Säureakzeptoren können alle üblichen Säurebindemittel Verwendung finden. Besonders bewährt haben sich Alkalicarbonate und -alkoholate, wie Natrium- und Kaliumcarbonat, Natrium- und Kaliummethylat bzw. -äthylat, ferner aliphatische, aromatische oder heterocyclische Amine, beispielsweise Triäthylamin, Trimethylamin, Dimethylanilin, Dimethylbenzylamin und Pyridin.

Die Reaktionstemperatur kann innerhalb eines größeren Bereichs variiert werden. Im allgemeinen arbeitet man zwischen 0 und 100° C, vorzugsweise bei 10 bis 80° C. Das erfindungsgemäße Verfahren wird im allgemeinen bei Normaldruck durchgeführt.

Zur Durchführung des erfindungsgemäßen Verfahrens werden die Ausgangsstoffe gewöhnlich in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird eine oder mehrere Stunden bei der erforderlichen Temperatur gerührt. Danach gießt man die Reaktionsmischung in Wasser, stellt gegebenenfalls schwach sauer und saugt vom auskristallisierten Produkt ab. Zur Charakterisierung dient der Schmelzpunkt.

Die erfindungsgemäßen N-(O-Äthyl-S-n-propyl-(di)-thiophosphoryloxy)-naphthalimide zeichnen sich durch eine sehr gute Wirksamkeit gegen pflanzenschädigende Insekten aus. Daher können sie mit Erfolg im Pflanzenschutz als Schädlingsbekämpfungsmittel eingesetzt werden.

Auf Grund ihrer guten Wirksamkeit gegen Ektoparasiten können die erfindungsgemäßen Verbindungen auch im veterinär-medizinischen Bereich verwendet werden.

Die Wirkstoffe eignen sich bei guter Pflanzenverträglichkeit und günstiger Warmblütertoxizität zur Bekämpfung von tierischen Schädlingen, insbesondere Insekten, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

aus der Ordnung der Isopoda, z. B. Oniscus asellus, Armadillidium vulgare, Porcellio scaber,
aus der Ordnung der Diplopoda, z. B. Blaniulus guttulatus,
aus der Ordnung der Chilopoda, z. B. Geophilus carpophagus, Scutigera spec.,
aus der Ordnung der Symphyla, z. B. Scutigerella immaculata,
aus der Ordnung der Thysanura, z. B. Lepisma saccharina,
aus der Ordnung der Collembola, z. B. Onychiurus armatus,
aus der Ordnung der Orthoptera, z. B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria,
aus der Ordnung der Dermaptera, z. B. Forficula auricularia,
aus der Ordnung der Isoptera, z. B. Reticulitermes spp.,
aus der Ordnung der Anoplura, z. B. Phylloxera vastatrix, Pemphigus spp., Pediculus humanus corporis, Haematopinus spp., Linognathus spp.,

aus der Ordnung der Mallophaga, z. B. Trichodectes spp., Damalinea spp.,
aus der Ordnung der Thysanoptera, z. B. Hercinothrips femoralis, Thrips tabaci,
aus der Ordnung der Heteroptera, z. B. Eurygaster spp., Dysdercus intermedius, Piesma quadrata, Cimex lectularius, Rhodnius prolixus, Triatoma spp.,
aus der Ordnung der Homoptera, z. B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.,
aus der Ordnung der Lepidoptera, z. B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana,
aus der Ordnung der Coleoptera, z. B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica,
aus der Ordnung der Hymenoptera, z. B. Diprion spp., Hoplocampa spp., Lasius spp., Monomorium pharaonis, Vespa spp.,
aus der Ordnung der Diptera, z. B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa,
aus der Ordnung der Siphonaptera, z. B. Xenopsylla cheopis, Ceratophyllus spp.

Die Wirkstoffe können in die üblichen Formulierungen übergeführt werden, wie Lösungen, Emulsionen, Suspensionen, Pulver, Schäume, Pasten, Granulate, Aerosole, wirkstoffimprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u. ä., sowie ULV-Kalt- und Warmnebel-Formulierungen.

Diese Formulierungen werden in bekannter Weise hergestellt, z. B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z. B. Aerosol-Treibgas, wie Halogenkohlenwasserstoffe sowie Butan, Propan, Stickstoff und Kohlendioxid; als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyäthylen-Fettsäure-Ester, Polyoxyäthylen-Fettalkohol-Äther, z. B. Alkylarylpolyglykol-äther, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabikum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Anwendung der erfindungsgemäßen Wirkstoffe geschieht im Veterinärsektor in üblicher Weise, wie durch orale Anwendung in Form von beispielsweise Tabletten, Kapseln, Tränken, Granulaten, durch dermale Anwendung in Form beispielsweise des Tauchens (Dippen), Sprühens (Sprayen), Aufgießens (pour-on and spot-on) und des Einpuderns sowie durch parenterale Anwendung in Form beispielsweise der Injektion.

## Beispiel A

### Myzus-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlblätter (Brassica oleracea), die stark von der Pfirsichblattlaus (Myzus persicae) befallen sind, werden durch Tauchen in die Wirkstoffzubereitung der gewünschten Konzentration behandelt.

Nach der gewünschten Zeit wird die Abtötung in % bestimmt. Dabei bedeutet 100%, daß alle Blattläuse abgetötet wurden; 0% bedeutet, daß keine Blattläuse abgetötet wurden.

Bei diesem Test zeigt die Verbindung des Herstellungsbeispiels 1 überlegene Wirksamkeit gegenüber dem Stand der Technik.

## Beispiel B

### Plutella-Test (Wirkungsdauer nach Spritzen)

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Kohlpflanzen (Brassica oleracea) von ca. 10 – 15 cm Höhe werden mit der gewünschten Wirkstoffzubereitung tropfnaß gespritzt.

Nach der gewünschten Zeit werden die Pflanzen mit Raupen der Kohlschabe (Plutella maculipennis) besetzt. Nach jeweils 3 Tagen wird die Abtötung in % bestimmt. Dabei bedeuten 100%, daß alle Raupen abgetötet wurden; 0% bedeutet, daß keine Raupen abgetötet wurden.

Bei diesem Test zeigt die Verbindung des Herstellungsbeispiels 1 überlegene Wirksamkeit gegenüber dem Stand der Technik.

## Beispiel C

### Test mit parasitierenden Fliegenlarven (Lucilia cuprina res.)

Emulgator: 80 Gewichtsteile Alkylarylpolyglykoläther

Zur Herstellung einer zweckmäßigen Wirkstoffzubereitung vermischt man 20 Gew.-Teile der betreffenden aktiven Substanz mit der angegebenen Menge des Emulgators und verdünnt das so erhaltene Gemisch mit Wasser auf die gewünschte Konzentration. Etwa 20 Fliegenlarven (Lucilia cuprina) werden in ein mit Wattestopfen entsprechender Größe beschicktes Teströhrchen gebracht, welches ca. 3 ml einer 20%igen Eigelbpulver-Suspension in Wasser enthält. Auf diese Eigelbpulver-Suspension werden 0,5 ml der Wirkstoffzubereitung gebracht. Nach 24 Stunden wird der Abtötungsgrad bestimmt.

Bei diesem Test zeigt die Verbindung des Herstellungsbeispiels überlegene Wirkung gegenüber dem Stand der Technik.

Herstellungsbeispiele

Beispiel 1

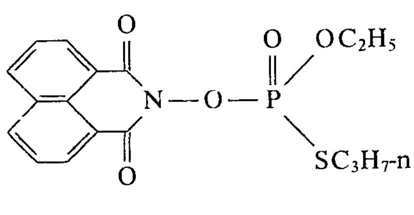

53,3 g (0,25 Mol) Naphthaloxim werden in 200 ml Dimethylformamid gelöst und mit 30 g (0,3 Mol) Triäthylamin versetzt. Bei 20 bis 30° C Innentemperatur werden zu dieser Mischung 50,6 g (0,25 Mol) O-Äthyl-S-n-propyl-thiolphosphorsäureesterchlorid tropfenweise gegeben. Das Reaktionsgemisch wird noch eine Stunde gerührt und dann in 1 l Eiswasser gegossen. Es wird kongosauer gestellt, abgesaugt, neutral gewaschen und getrocknet. Nach Umkristallisation des Rohproduktes aus Isopropanol erhält man 57 g (60% der Theorie) N-(O-Äthyl-S-n-propyl-thiophosphoryloxy)-naphthalimid. Schmelzpunkt: 145° C.

Beispiel 2

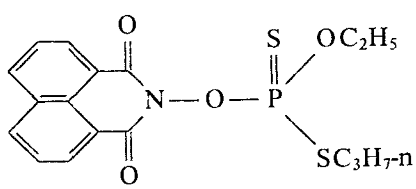

In eine Lösung aus 41 g (0,2 Mol) Naphthaloxim und 22 g (0,22 Mol) Triäthylamin in 100 ml Dimethylformamid läßt man 44 g (0,2 Mol) O-Äthyl-S-n-propyl-thiono-thiolphosphorsäurediesterchlorid zügig eintropfen. Hierbei steigt die Innentemperatur von ca. 25 auf 55° C an. Das Reaktionsgemisch wird noch eine Stunde gerührt und dann in Wasser gegossen, gut durchgerührt, abgesaugt und getrocknet. Man erhält 75 g (95% der Theorie) N-(O-Äthyl-S-n-propyl-dithiophosphoryloxy)-naphthalimid. Schmelzpunkt: 135° C.

**Patentansprüche**

1. N-(O-Äthyl-S-n-propyl-(di)-thiophosphoryloxy)-naphthalimide der Formel

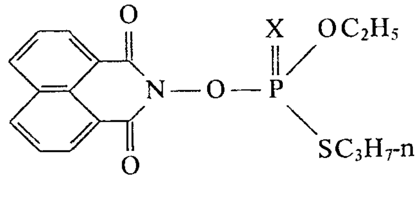

(I)

in welcher

X für Sauerstoff oder Schwefel steht.

2. Verfahren zur Herstellung von N-(O-Äthyl-S-n-propyl-(di)-thiophosphoryloxy)-naphthalimiden der Formel (I)

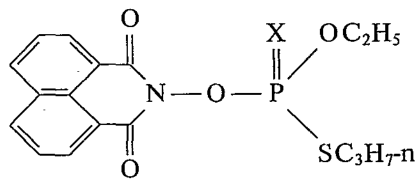

(I)

in welcher
X für Sauerstoff oder Schwefel steht,
dadurch gekennzeichnet, daß man O-Äthyl-S-n-propyl-(di)-thiophosphorsäurediesterhalogenide der Formel

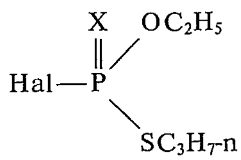

(II)

in welcher
X für Sauerstoff oder Schwefel steht und
Hal für Chlor oder Brom, insbesondere für Chlor steht,
mit Naphthaloxim der Formel

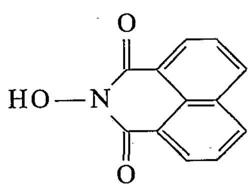

(III)

gegebenenfalls in Gegenwart eines Säureakzeptors und gegebenenfalls in Gegenwart eines Verdünnungsmittels, umsetzt.

3. Schädlingsbekämpfungsmittel, gekennzeichnet durch einen Gehalt an Verbindungen der Formel I gemäß den Ansprüchen 1 und 2.

4. Insektizides Mittel, gekennzeichnet durch einen Gehalt an Verbindungen der Formel I gemäß den Ansprüchen 1 und 2.

5. Verwendung von Verbindungen der Formel I gemäß den Ansprüchen 1 und 2 zur Bekämpfung von Insekten.

6. Verfahren zur Herstellung von insektiziden Mitteln, dadurch gekennzeichnet, daß man Verbindungen der Formel I gemäß den Ansprüchen 1 und 2 mit Streckmitteln und/oder oberflächenaktiven Mitteln mischt.

**Claims**

1. N-(O-Ethyl-S-n-propyl-(di)-thiophosphoryloxy)-naphthalimides of the formula

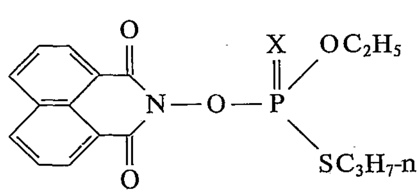

(I)

in which
X represents oxygen or sulphur.

2. Process for the preparation of N-(O-ethyl-S-n-propyl-(di)-thiophosphoryloxy)-naphthalimides of the formula (I)

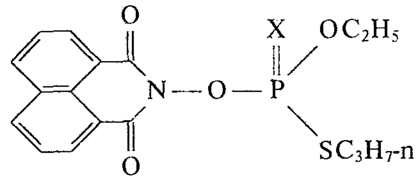

(I)

in which

X represents oxygen or sulphur,

characterised in that O-ethyl-S-n-propyl-(di)-thiophosphoric acid diester halides of the formula

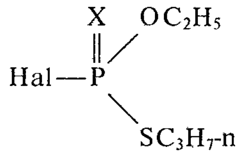

(II)

in which

X represents oxygen or sulphur and

Hal represents chlorine or bromine, especially chlorine,

are reacted with naphthaloxime of the formula

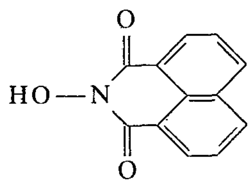

(III)

if appropriate in the presence of an acid acceptor and, if appropriate, in the presence of a diluent.

3. Pesticide, characterised in that it contains compounds of formula I according to Claims 1 and 2.

4. Insecticidal agent, characterised in that it contains compounds of formula I according to Claims 1 and 2.

5. Use of compounds of formula I according to Claims 1 and 2 for combating insects.

6. Process for the preparation of insecticidal agents, characterised in that compounds of formula I according to Claims 1 and 2 are mixed with extenders and/or surface-active agents.

**Revendications**

1. Des N-(O-éthyl-S-n-propyl-(di)-thiophosphoryloxy)-naphtalimides de formule:

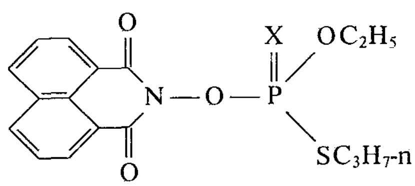

(I)

dans laquelle:

X est de l'oxygène ou du soufre.

2. Procédé de production de N-(O-éthyl-S-n-propyl-(di)-thiophosphoryloxy)-naphtalimides de formule (I):

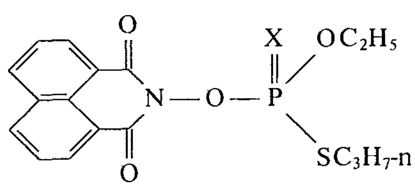

(I)

dans laquelle:

X est de l'oxygène ou du soufre,

caractérisé en ce qu'on fait réagir des halogénures de diester de O-éthyle et de S-n-propyle d'acide (di)-thiophosphorique de formule:

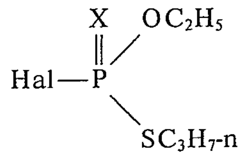

(II)

dans laquelle:
X est de l'oxygène ou du soufre, et
Hal est du chlore ou du brome, notamment du chlore,
avec la naphtaloxime de formule:

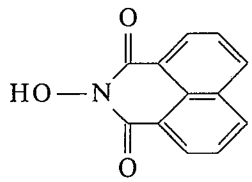

(III)

le cas échéant en présence d'un accepteur d'acide et en la présence éventuelle d'un diluant.

3. Compositions pesticides, caractérisées par une teneur en composés de formule (I) suivant les revendications 1 et 2.

4. Composition insecticide, caractérisée par une teneur en composés de formule (I) suivant les revendications 1 et 2.

5. Utilisation de composés de formule (I) suivant les revendications 1 et 2 dans la lutte contre des insectes.

6. Procédé de préparation de compositions insecticides, caractérisé en ce qu'on mélange des composés de formule (I) suivant les revendications 1 et 2 avec des diluants et/ou des agents tensio-actifs.